# EUROPEAN PATENT APPLICATION

(11) **EP 3 552 705 A1**
(43) Date of publication of application: **16.10.2019**
(21) Application number: 19162862.7
(22) Date of filing: 14.03.2019
(51) Int. Cl.: B01L 3/02, B41J 2/165, G01N 35/10

(54) **DROPLET DISPENSING APPARATUS**

(30) Priority: 13.04.2018 JP 2018077768
(71) Applicant: Toshiba Tec Kabushiki Kaisha, 141-8562 Tokyo (JP)
(72) Inventor: YOKOYAMA, Shuhei, Shinagawa-ku, Tokyo 141-8562 (JP); KITAWAKI, Takaya, Shinagawa-ku, Tokyo 141-8562 (JP); YAMAMOTO, Hiroshi, Shinagawa-ku, Tokyo 141-8562 (JP)
(74) Representative: Fédit-Loriot

(57) **Abstract**

A droplet dispensing apparatus includes a droplet ejection device, a microplate holder, and a sheet stand. The droplet ejection device has a solution holding vessel and an array of nozzles for ejection of droplets communicating with the solution holding vessel. The microplate holder is configured to hold a microplate into which the droplets are ejected. A test sheet being colored or discolored at a place where a light-transmissive droplet is received for testing the array of nozzles can be placed on the sheet stand. The droplet ejection device is configured to move to a first position above the microplate holder for ejection of droplets into the microplate and to a second position above the sheet stand for ejection of droplets onto the test sheet.

## Description

### FIELD

Embodiments described herein relate generally to a droplet dispensing apparatus and a method for testing a droplet ejection device of the droplet dispensing apparatus.

### BACKGROUND

In the related art, there is a droplet dispensing apparatus for dispensing picoliter (pL) to microliter (µL) volumes into a microplate for biological or pharmaceutical R&D, medical diagnosis, medical inspection, or agricultural tests.

The droplet dispensing apparatus of one type includes a droplet ejection device configured to discharge a solution filled in the droplet ejection device. The droplet is discharged from the droplet ejection device to the microplate. The droplet ejection device is detachable from the droplet dispensing apparatus. The droplet ejection device is usually discarded after one use to prevent contamination.

The solution to be dispensed in biological or pharmaceutical R&D testing is often a clear (no color) solution. Non-limiting examples of clear solvents which may be used include water, phosphate buffered saline, glycerin aqueous solution, dimethylsulfoxide and the like. Materials for evaluation or testing are dissolved in these solvents. The dissolved material may occasionally impart a color to the solution being tested, but generally the resulting solution will still be substantially transparent even if a tinge of color is imparted to the tested solution since relatively small concentrations of the material are typically utilized in testing.

A droplet dispensing apparatus drops droplets from a plurality of nozzles into a well in a microplate. However, when impurities are included in the droplets, some of the nozzles may fail to discharge a droplet appropriately. In this case, the proper amount of solution may not be supplied to a well, which may lead to an incorrect evaluation of the solution/material being tested.

### SUMMARY OF INVENTION

To solve the above-cited problems, there is provided a droplet dispensing apparatus, comprising:
a droplet ejection device having a solution holding vessel and an array of nozzles for ejection of droplets communicating with the solution holding vessel;
a microplate holder configured to hold a microplate including an array of wells into which the droplets are ejected; and
a sheet stand on which a test sheet for testing the array of nozzles is placeable, wherein
the test sheet has a receptive layer for receiving a droplet and becomes colored or discolored at a place where a light-transmissive droplet is received, and
the droplet ejection device is configured to:
   move to a first position above the microplate holder for ejection of droplets into one of the wells, and
   move to a second position above the sheet stand for ejection of droplets onto the test sheet.

Preferably the microplate holder and the sheet stand may be both attached to a base.

Preferably the microplate holder and the sheet stand may be adjacent to each other.

Preferably the sheet stand may be configured to be detachably attached to the microplate holder in place of the microplate.

Preferably the droplet ejection device may further include:
an array of pressure chamber each includes a discharge port for supplying a solution to a corresponding nozzle of the array of nozzles on a first side, and a supply port communicating with the solution holding vessel on a second side; and
an array of actuators each configured to cause a pressure change in a corresponding pressure chamber in the array of pressure chambers to control an ejection of a droplet of the solution from the corresponding nozzle.

Preferably the droplet dispensing apparatus may further comprise:
an image capturing device configured to move to a position above the sheet stand; and
a controller configured to perform image processing on image data generated from an image captured by the image capturing device when at the position above the sheet stand.

Preferably the controller may further be configured to send an image signal corresponding to the image data to a display and cause the display to display a captured image.

Preferably the solution holding vessel may include a solution inlet for receiving solution and a solution outlet configured to supply the solution to the array of nozzles.

In another exemplary embodiment, there is also provided a method for testing a droplet ejection device, comprising:
placing a test sheet for testing an array of nozzles of a droplet ejection device on a sheet stand of a droplet dispensing apparatus, the test sheet being at a same height as an upper surface of a microplate when the microplate is attached to a microplate holder of the droplet dispensing apparatus;
positioning the droplet ejection device above the test sheet;
ejecting droplets from the array of nozzles onto the test sheet; and
capturing image of the test sheet after ejecting the droplets, wherein
the test sheet has a receptive layer for receiving a droplet and becomes colored or discolored at a place where a light-transmissive droplet is received.

Preferably the sheet stand may be fixed adjacent to the microplate holder on a base of the droplet dispensing apparatus.

Preferably the sheet stand may be disposed on the microplate holder during the ejecting of droplets onto the test sheet.

Preferably capturing the image of the test sheet may comprise moving an image capturing device to a position of the test sheet after ejecting the droplets onto the test sheet.

Preferably the ejected droplets may be from an aqueous, clear solution.

Preferably the ejected droplets may be from a non-aqueous, clear solution.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 illustrates a perspective view of a droplet dispensing apparatus according to a first embodiment.
FIG. 2 illustrates a plan view of an upper surface of a droplet ejection device.
FIG. 3 illustrates a plan view of a lower surface of the droplet ejection device.
FIG. 4 illustrates a cross-sectional view of the droplet ejection device taken along a line F4-F4 in FIG. 2.
FIG. 5 illustrates a plan view of an upper surface of a solution discharging array of the droplet ejection device.
FIG. 6 illustrates a cross-sectional view of the solution discharging array taken along a line F6-F6 in FIG. 5.
FIG. 7 illustrates a test pattern formed on a test paper by a solution dropped from the droplet ejection device.
FIG. 8 is a block diagram illustrating a control system of a discharging system of the droplet ejection device.
FIG. 9 is a flowchart illustrating operations of the droplet dispensing apparatus.
FIG. 10 illustrates a perspective view of a droplet dispensing apparatus according to a second embodiment.
FIG. 11 illustrates a plan view of a droplet dispensing apparatus according to a third embodiment.
FIG. 12 illustrates a front view of the droplet dispensing apparatus according to the third embodiment.
FIG. 13 is a block diagram illustrating a control system of a discharging system of a droplet ejection device according to the third embodiment.
FIG. 14 illustrates a plan view of a droplet dispensing apparatus according to a fourth embodiment.

### DETAILED DESCRIPTION

One or more of embodiments described herein are directed to providing a droplet dispensing apparatus capable of preventing the incorrect evaluation.

In general, according to an embodiment, a droplet dispensing apparatus includes a droplet ejection device, a microplate holder, and a sheet stand. The droplet ejection device has a solution holding vessel and an array of nozzles for ejection of droplets from an array of nozzles connected to the solution holding vessel. The microplate holder is configured to hold a microplate, which includes wells into which the droplets can be ejected. A test sheet for testing the array of nozzles can be placed on the sheet stand. The test sheet has a receptive layer for receiving a droplet and becomes colored or discolored at a place where a light-transmissive droplet is received. The droplet ejection device is configured to move to a first position above the microplate holder for ejection of droplets onto the microplate and to a second position above the sheet stand for ejection of droplets onto the test sheet.

Hereinafter, example embodiments will be described with reference to the drawings. Each of drawings illustrates a schematic view for better understanding of the embodiment. Shapes, dimensions, ratios, and the like in the drawings may be different from actual values but can be changed or modified as appropriate.

### First Embodiment

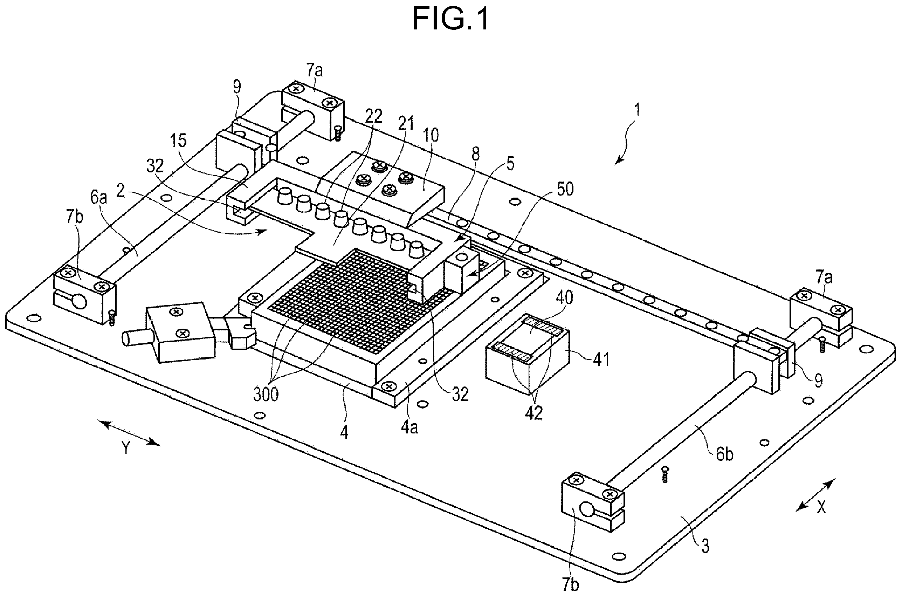

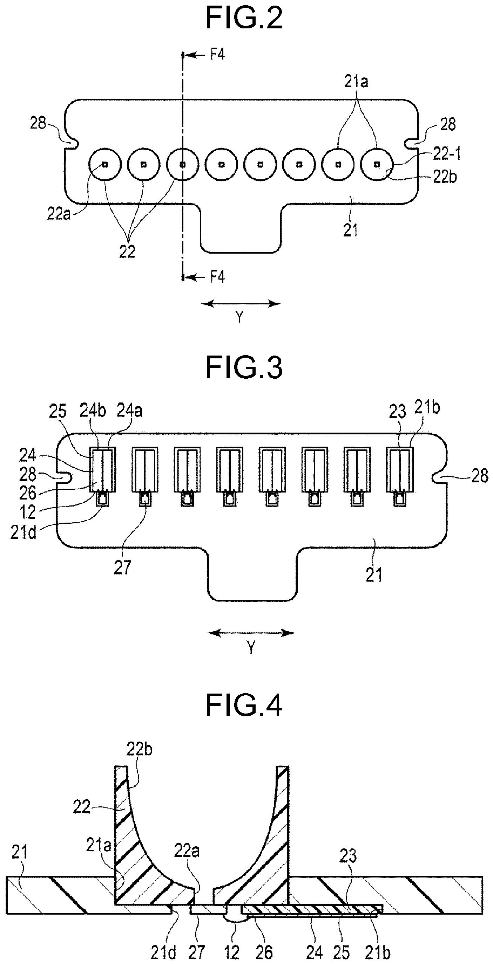

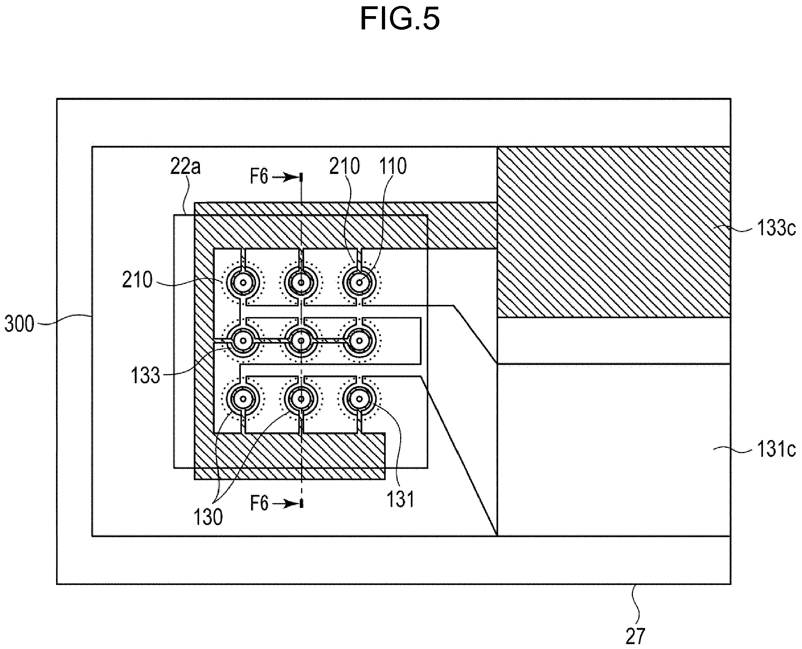

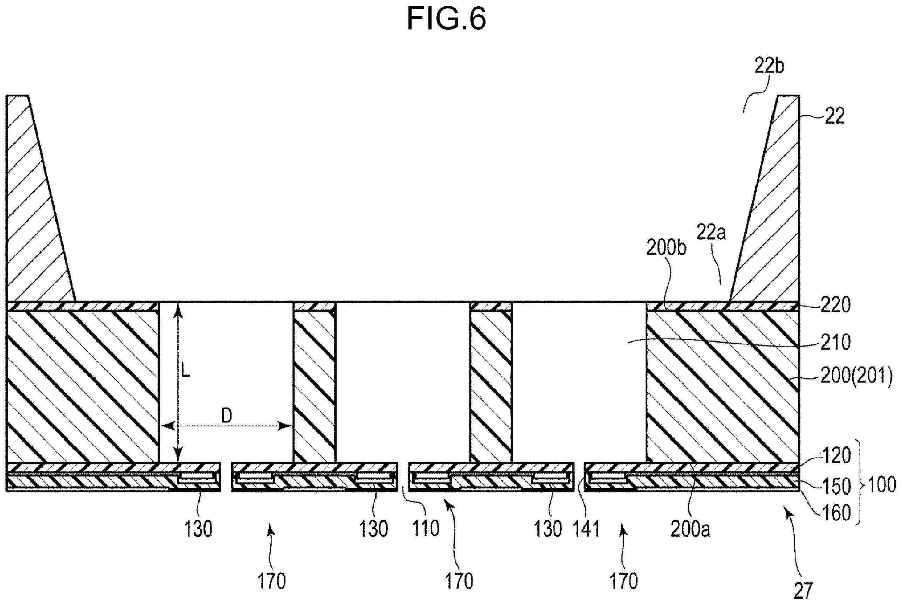

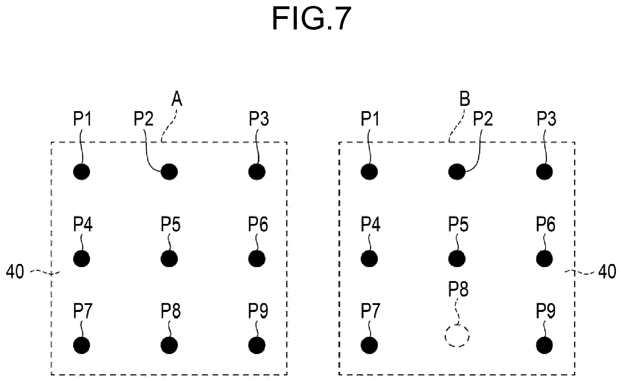

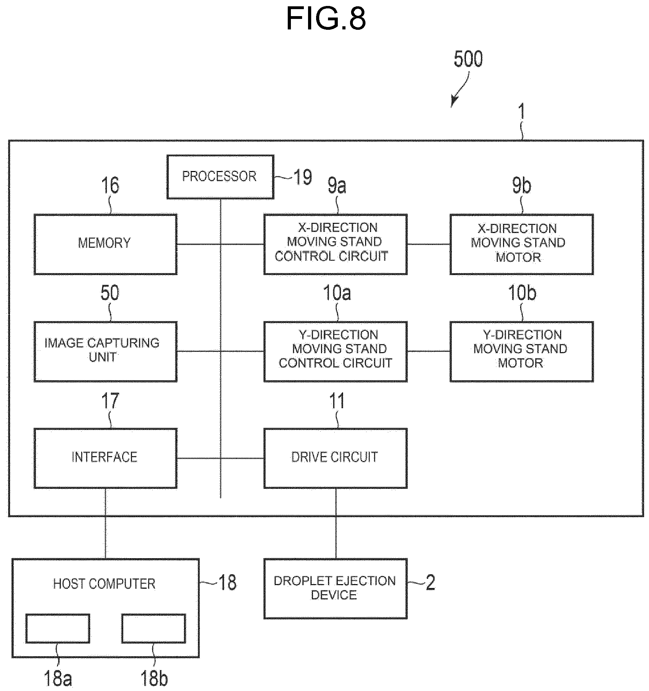

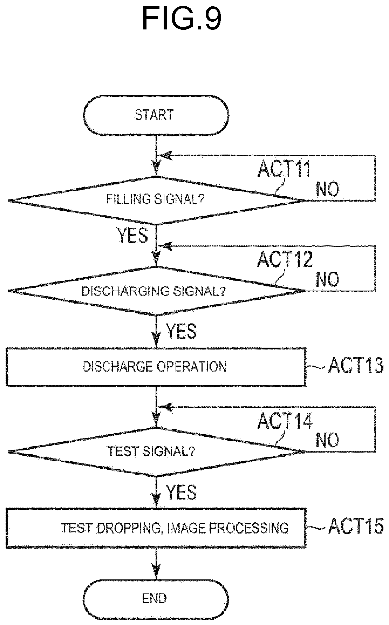

A droplet dispensing apparatus 1 according to a first embodiment will be described with reference to FIGS. 1 to 9. FIG. 1 illustrates a perspective view of the droplet dispensing apparatus 1. FIG. 2 illustrates a plan view of an upper surface of a droplet ejection device (droplet ejection unit) 2 in the droplet dispensing apparatus 1. FIG. 3 illustrates a plan view of a lower surface (a surface at which the droplet is discharged) of the droplet ejection device 2. FIG. 4 illustrates a cross-sectional view of the droplet ejection device 2 taken along a line F4-F4 in FIG. 2. FIG. 5 illustrates a plan view of an upper surface of a solution discharging array of the droplet ejection device 2. FIG. 6 illustrates a cross-sectional view of the solution discharging array taken along a line F6-F6 in FIG. 5. FIG. 7 illustrates a test pattern formed on a test paper by a solution dropped from the droplet ejection device 2. FIG. 8 is a block diagram illustrating a control system of a discharging system of the droplet ejection device 2. FIG. 9 is a flowchart illustrating operations of the droplet dispensing apparatus 1.

The droplet dispensing apparatus 1 includes a rectangular plate-like base 3, a mounting module 5 on which the droplet ejection device 2 is mounted, a test paper (medium) placing stand 41, and an image capturing unit 50. In this embodiment, the solution is dropped into a 1536-well microplate 4, which may be referred to as a dispensing section 4 in some contexts. A longitudinal direction of the base 3 is referred to as X-direction, and a horizontal direction of the base 3 is referred to as Y-direction. X-direction is perpendicular to Y-direction. The microplate 4 and the test paper placing stand 41 configure a receiving section for receiving droplets discharged from the droplet ejection device 2.

The microplate 4 is fixed to the base 3. A frame-like attachment member 4a is provided on the base 3 to detachably attach the microplate 4 to the base 3. A pair of right and left X-direction guide rails 6a, 6b extends on the base 3 in X-direction at both sides of the attachment member 4a of the microplate 4. Both ends of each of the X-direction guide rails 6a, 6b are fixed to fixing stands 7a, 7b, each of which protrudes from the base 3.

A Y-direction guide rail 8, extending in Y-direction, is between the X-direction guide rails 6a, 6b. Both ends of the Y-direction guide rail 8 are respectively fixed to X-direction moving stands 9 slidable in X-direction along the X-direction guide rails 6a, 6b.

The Y-direction guide rail 8 is provided with a Y-direction moving stand 10 movable in Y-direction along the Y-direction guide rail 8. The mounting module 5 is mounted on the Y-direction moving stand 10. The droplet ejection device 2 according to this embodiment is fixed to the mounting module 5. According to a movement in which the Y-direction moving stand 10 moves in Y-direction along the Y-direction guide rail 8, combined with a movement in which the X-direction moving stand 9 moves in X-direction along the X-direction guide rails 6a, 6b, the droplet ejection device 2 is movably supported at any position in X- and Y- directions perpendicular to each other.

Furthermore, the image capturing unit 50 is mounted on a part of a module body 15, which is an attachment section of the droplet ejection device 2, in the mounting module 5. Accordingly, the image capturing unit 50 is movably supported at any position in X- and Y- directions perpendicular to each other, together with the droplet ejection device 2.

The image capturing unit 50 is, for example, a small camera. The image capturing unit 50 captures a test pattern p which is formed by a solution dropped from the droplet ejection device 2 on a test paper 40 (described below). The captured image data is sent to an external control PC or the like. The image capturing unit 50 may also be, for example, a small microscope equipped with a CCD camera and an adjustable zoom lens.

The droplet ejection device 2 according to the first embodiment includes a flat base member 21, which is a rectangular plate. A plurality of solution holding vessels 22 are arranged side by side in a row in Y-direction on a front side of the base member 21, as shown in FIG. 2. A case where eight solution holding vessels 22 are arranged is described in the present embodiment, but the number of the solution holding vessels 22 is not limited to eight. The solution holding vessel 22 is a bottomed and cylindrical-shaped vessel of which an upper surface is opened, as shown in FIG. 4. A first recessed portion 21a is formed on a front side of the base member 21 to attach the cylindrical-shaped vessel at a position corresponding to each of the solution holding vessels 22.

A bottom portion of the solution holding vessel 22 is adhesively fixed to the first recessed portion 21a. Furthermore, an opening 22a serving as a solution outlet is formed at a center position on the bottom portion of the solution holding vessel 22. The opening area of an upper opening 22b opened on an upper surface of the solution holding vessel 22 is larger than the opening area of the opening 22a as the solution outlet.

Notches (engaging recesses) 28 for mounting and fixing the base member 21 to the mounting module 5 are respectively formed at both ends of the base member 21. The two notches 28 of the base member 21 are formed in a semi-oval notch shape. The mounting-fixing notch 28 may be formed in a semi-circular shape, a semi-elliptical shape, or a triangular shape, for example. Two notches 28 have different shapes in this embodiment. Accordingly, the base member 21 has different shapes on right and left sides, thus the orientation of the base member 21 can be easily recognized.

The same number of electrical boards 23 as the solution holding vessels 22 are arranged side by side in a row in Y-direction on a rear side of the base member 21, as shown in FIG. 3. The electrical board 23 is a rectangular flat plate member. A second recessed portion 21b, which is a rectangular recess for mounting the electrical board 23, and a mounting opening 21d of a solution discharging array 27 (described below) communicating with the second recessed portion 21b are formed on the rear side of the base member 21, as shown in FIG. 4. A proximal end portion of the second recessed portion 21b extends to the vicinity of an upper end of the base member 21 in FIG. 3, corresponding to a position near a right end in FIG. 4. A distal end portion of the second recessed portion 21b extends to a position overlapped with a part of the solution holding vessel 22, as shown in FIG. 4. The electrical board 23 is adhered and fixed to the second recessed portion 21b.

The electrical board 23 includes an electrical board wiring 24 patterned and formed on a surface opposite to a surface where the electrical board 23 is adhered and fixed to the second recessed portion 21b. Two wiring patterns 24a, 24b are formed in the electrical board wiring 24, and respectively connected to a terminal portion 131c (see FIG. 5) of a lower electrode 131 (described below) and a terminal portion 133c (see FIG. 5) of an upper electrode 133 (described below).

A control signal input terminal 25 for inputting a control signal from the outside is formed at one end of the electrical board wiring 24. An electrode terminal connecting portion 26 is provided at the other end of the electrical board wiring 24. The electrode terminal connecting portion 26 is a connection portion for connecting with the lower electrode terminal portion 131c and the upper electrode terminal portion 133c, which are formed on a solution discharging array 27, as shown in FIG. 5.

Additionally, the base member 21 includes a through-hole of the opening 21d for mounting the solution discharging array opening 27. The opening 21d is a rectangular opening as shown in FIG. 3, which is formed at a position overlapping the recessed portion 21a on the rear side of the base member 21.

The solution discharging array 27 shown in FIG. 5 is adhered and fixed to a lower surface of the solution holding vessel 22 so as to cover the opening 22a of the solution holding vessel 22. The solution discharging array 27 is arranged at a position corresponding to the opening 21d of the base member 21.

The solution discharging array 27 is formed by laminating a nozzle plate 100 and a pressure chamber structure 200, as shown in FIG. 6. The nozzle plate 100 includes a plurality of nozzles 110 for discharging a solution, a diaphragm 120, a driving element 130 as a driving unit, a protective film 150 as a protective layer, and a fluid repellent film 160. An actuator 170 includes a diaphragm 120 and the driving element 130. The plurality of nozzles 110 are arranged in, for example, 3 X 3 columns. The plurality of nozzles 110 are disposed inside the opening 22a of the solution holding vessel 22 in this embodiment. A nozzle cluster is formed by these nozzles 110.

The diaphragm 120 is formed integrally with, for example, the pressure chamber structure 200. A silicon wafer 201 for manufacturing the pressure chamber structure 200 is heated in an oxygen atmosphere, and then silicon dioxide (SiO₂) film is formed by oxidation of a surface of the silicon wafer 201. The diaphragm 120 is subsequently formed of the SiO₂ film that has been formed on the surface of the silicon wafer 201 by heating the silicon wafer 201 in the oxygen atmosphere. The diaphragm 120 may instead be formed by forming the SiO₂ film on the surface of the silicon wafer 201 with a CVD method (chemical vapor deposition method). A film thickness of the diaphragm 120 is preferably in the range of 1 to 30 µm.

The driving element 130 is formed in each nozzle 110. The driving element 130 has an annular shape surrounding the nozzle 110. However, the shape of the driving element 130 is not limited thereto, and may be a C-shape formed by cutting out a part of the annular shape, for example.

The driving element 130 is electrically connected to the electrode terminal connecting portion 26 by a wire wiring 12. That is, the lower electrode terminal portion 131c is electrically connected to the wiring pattern 24a on one surface of the driving element 130. The upper electrode terminal portion 133c is electrically connected to the wiring pattern 24b on the other surface of the driving element 130. Alternatively, a flexible cable may be used. That is, an electrode pad of the flexible cable is electrically connected to the electrode terminal connecting portion 26, or to the terminal portions 131c, 133c, by thermocompression bonding using an anisotropic conductive film.

The driving element 130 receives a differential voltage between a voltage applied to the wiring pattern 24a and a voltage applied to the wiring pattern 24b. The driving element 130 is driven by the differential voltage.

The driving element 130 consists of a piezoelectric film as a piezoelectric material, with the lower electrode 131 and the upper electrode 133, which are formed on both surfaces of the piezoelectric film. The piezoelectric film is made of PZT (Pb(Zr,Ti)O₃: lead zirconium titanate). The piezoelectric film provided in the driving element 130 may also be made of other piezoelectric materials, for example, PTO (PbTiO₃: lead titanate), PMNT (Pb(Mg_{1/3}Nb_{2/3})O₃-PbTiO₃), PZNT (Pb(Zn_{1/3}Nb_{2/3})O₃-PbTiO₃), KNN (a compound of KNbO₃ and NaNbO₃), ZnO, AlN, or the like.

The piezoelectric film provided in the driving element 130 generates polarization in a thickness direction. When an electric field in the same direction as the polarization is applied to the driving element 130, the driving element 130 expands and contracts in a direction perpendicular to an electric field direction. That is, the driving element 130 expands and contacts in a direction perpendicular to a film thickness.

The nozzle plate 100 includes the protective film 150. The protective film 150 includes a cylindrical solution passing portion 141 communicating with the nozzle 110 of the diaphragm 120. The nozzle plate 100 includes the fluid repellent film 160 covering the protective film 150. The fluid repellent film 160 is formed by spin-coating, for example, a silicone-based resin having a property of repelling a solution. The fluid repellent film 160 may also be formed of a material having a property of repelling a solution, such as a fluorine-containing resin.

The pressure chamber structure 200 includes a warp reduction film 220, which is a warp reduction layer, on a surface opposite to the diaphragm 120. The pressure chamber structure 200 includes a pressure chamber 210 that penetrates the warp reduction film 220 to reach a position of the diaphragm 120 and communicates with the nozzle 110. The pressure chamber 210 is formed, for example, in a circular shape coaxially with the nozzle 110.

The pressure chamber 210 has an opening communicating with the opening 22a of the solution holding vessel 22. It is preferable to set a size L in a depth direction larger than a size D in a width direction, in the opening of the pressure chamber 210. By setting the size L in the depth direction larger than the size D in the width direction, the pressure applied to the solution in the pressure chamber 210 by vibration of the diaphragm 120 of the nozzle plate 100 is delayed to release to the solution holding vessel 22.

A surface on which the diaphragm 120 of the pressure chamber 210 is arranged is referred to as a first surface 200a, and a surface on which the warp reduction film 220 is arranged is referred to as a second surface 200b, in the pressure chamber structure 200. The solution holding vessel 22 is adhered to the side of the warp reduction film 220 of the pressure chamber structure 200 by, for example, an epoxy adhesive. The pressure chamber 210 of the pressure chamber structure 200 communicates with the opening 22a of the solution holding vessel 22 through an opening on the side of the warp reduction film 220. The opening area of the opening 22a of the solution holding vessel 22 is larger than the opening area of the opening communicating with the opening 22a of the solution holding vessel 22 of all pressure chambers 210 formed on the solution discharging array 27. Therefore, all pressure chambers 210 formed on the solution discharging array 27 communicate with the opening 22a of the solution holding vessel 22.

The diaphragm 120 is deformed in a thickness direction by the operation of the planar driving element 130. The droplet ejection device 2 discharges the solution filled up to the nozzle 110 by the pressure change in the pressure chamber 210 of the pressure chamber structure 200 caused by the deformation of the diaphragm 120.

The test paper placing stand 41 shown in FIG. 1 is a table on which the test paper 40 is placed. The test paper placing stand 41 is disposed in a movable region of the droplet ejection device 2 on the base 3. On the test paper 40, the test pattern p is formed by the solution ejected from the droplet ejection device 2. The test pattern p can be used for detecting one or more non-discharging nozzle from among the nine nozzles 110 of the droplet ejection device 2.

The test paper 40 has a receptive layer, and becomes colored or discolored at a place where a light-transmissive droplet is received. A water sensitive medium, such as from Spraying Systems Co., is used as the test paper 40 in this example. The test paper 40 is light yellow in the normal state (i.e., when not previously inspected or otherwise used), but changes to dark blue at a place at which the fluid has attached. The test paper 40 also changes to dark blue at a place where the droplet is contacted if dimethylsulfoxide (DMSO), as an organic solvent, is used instead of an aqueous solution such as water, phosphate buffered saline, or aqueous glycerin solution. The solution attached onto the test paper 40 keeps a substantially dome (hemispherical) shape. Even after the solution volatilizes (evaporates), the dark blue discolored pattern on the test paper 40 is maintained.

In this embodiment, the test pattern p is formed on the test paper 40 by dropping one or more droplets on the test paper 40 from each of the nine nozzles 110 of the solution discharging array 27 communicating with the solution holding vessel 22 for dropwise operation within the droplet ejection device 2. Each of FIGS. 7A and 7B shows an example of a test pattern p (described below) formed on the test paper 40.

The test paper placing stand 41 includes test paper holding members 42 for holding the test paper 40 on the test paper placing stand 41, as shown in FIG. 1. Rectangular paperweights may be employed as the test paper holding members 42, for example. The test paper holding members 42 may instead be clips formed on the test paper placing stand 41, but, in general, any holding member type may be utilized as long as they have a function of securing and holding the test paper.

It is preferable that the height of the test paper placing stand 41 is substantially the same as the height of an upper surface of the microplate 4 on which a well opening 300 of the microplate 4 is disposed. In this case, it is unnecessary to change from the height at which the droplet ejection device 2 ejects the solution droplets into the well opening 300 of the microplate 4 to the height at which the droplet ejection device 2 ejects the solution droplets onto the test paper 40 on the test paper placing stand 41, and vice versa.

A control system of a discharging system 500 of the droplet ejection device 2 will be described below. FIG. 8 is a block diagram illustrating the control system of the discharging system 500. The discharging system 500 of this embodiment includes the droplet dispensing apparatus 1, the droplet ejection device 2, a host computer 18 and the like.

The host computer 18 controls the droplet dispensing apparatus 1 in accordance with an operation from an operator. The host computer 18 includes an operation unit 18a, a display unit 18b and the like. Furthermore, the host computer 18 consists of a processor, RAM, ROM, NVM and the like.

The operation unit 18a receives an input operation by the operator. The operation unit 18a is, for example, a keyboard, a mount, a touchscreen or the like.

The display unit 18b displays various kinds of information under the control of the processor 19 of the droplet dispensing apparatus 1. The display unit 18b includes, for example, a liquid crystal monitor. When the operation unit 18a includes the touchscreen or the like, the display unit 18b may be integrally formed with the operation unit 18a.

The host computer 18 receives various operations via the operation unit 18a. For example, the host computer 18 receives an operation of the operator indicating that the solution holding vessel 22 is filled with the solution. Furthermore, the host computer 18 receives an operation of the operator issuing an instruction to discharge the solution from the solution holding vessel 22.

When the host computer 18 receives an operation of the operator instructing to discharge the solution from the solution holding vessel 22, the host computer 18 transmits a signal to discharge the solution to the droplet dispensing apparatus 1. The host computer 18 may receive an operation instructing to discharge the solution for each solution holding vessel 22. For example, the host computer 18 may receive the operation indicating that the solution holding vessel 22 is filled with the solution or the operation issuing an instruction to discharge the solution from the solution holding vessel 22 for each solution holding vessel 22.

The droplet dispensing apparatus 1 includes an X-direction moving stand control circuit 9a, an X-direction moving stand motor 9b, a Y-direction moving stand control circuit 10a, a Y-direction moving stand motor 10b, a driving circuit 11, a processor 19, a memory 16, an interface 17, an image capturing unit 50 and the like, as shown in FIG. 8. These units are connected to each other via a data bus. The droplet dispensing apparatus 1 may have an additional configuration if required or may exclude a specific configuration, in addition to or from the configuration as shown in FIG. 8.

The processor 19 has a function of controlling the overall operation of the droplet dispensing apparatus 1. The processor 19 may include an internal cache, various interfaces and the like. The processor 19 implements various processes by executing programs stored in advance in the internal cache, the memory 16 and the like.

Furthermore, a part of various functions implemented by the processor 19 executing the programs may be implemented by a hardware circuit. In this case, the processor 19 controls the functions executed by the hardware circuit.

The memory 16 stores various kinds of data. For example, the memory 16 stores a control program, control data and the like. The control program and the control data are stored in advance depending on a specification of the droplet dispensing apparatus 1. The control program is, for example, a program that supports the functions implemented by the droplet dispensing apparatus 1.

The memory 16 temporarily stores, for example, data being processed by the processor 19. Additionally, the memory 16 may store data required for executing an application program, execution results of the application program and the like.

The interface 17 is an interface for transmitting and receiving data to and from the host computer 18. For example, the interface 17 is connected to the host computer 18 via a wired or wireless line. For example, the interface 17 may support a LAN connection, a USB connection, or a Bluetooth® connection.

The X-direction moving stand control circuit 9a drives the X-direction moving stand motor 9b based on a signal from the processor 19. The X-direction moving stand control circuit 9a supplies a signal or electric power to the X-direction moving stand motor 9b to drive the X-direction moving stand motor 9b.

The X-direction moving stand motor 9b moves the X-direction moving stand 9 in X-direction. For example, the X-direction moving stand motor 9b is connected to the X-direction moving stand 9 via a gear or the like, and moves the X-direction moving stand 9 in X-direction.

The Y-direction moving stand control circuit 10a drives the Y-direction moving stand motor 10b based on a signal from the processor 19. The Y-direction moving stand control circuit 10a supplies a signal or electric power to the Y-direction moving stand motor 10b to drive the Y-direction moving stand motor 10b.

The Y-direction moving stand motor 10b moves the Y-direction moving stand 10 in Y-direction. For example, the Y-direction moving stand motor 10b is connected to the Y-direction moving stand 10 via a gear or the like, and moves the Y-direction moving stand 10 in Y-direction.

Functions implemented by the processor 19 of the droplet dispensing apparatus 1 will be described below. The following functions are implemented by the processor 19 executing a program stored in the memory 16 or the like.

First, the processor 19 has a function of determining that the solution holding vessel 22 is filled with the solution. For example, the operator inputs an operation indicating that the solution is completely filled in the solution holding vessel 22 to the operation unit 18a of the host computer 18. The operator may input an operation indicating that the specific solution holding vessel 22 is completely filled with the solution.

The host computer 18 receives the operation indicating the solution is completely filled, and then transmits a signal (filling signal) indicating that the solution is completely filled to the droplet dispensing apparatus 1. The filling signal may indicate that the specific solution holding vessel 22 is completely filled with the solution.

The processor 19 determines whether or not the filling signal is received from the host computer 18 via the interface 17. The processor 19 detects that the solution holding vessel 22 has been filled with the solution when the filling signal is received from the host computer 18. For example, the operator supplies a predetermined amount of the solution to the solution holding vessel 22 from the upper opening 22b of the solution holding vessel 22 using a pipetter or the like. The solution is held on an inner surface of the solution holding vessel 22. The opening 22a at the bottom of the solution holding vessel 22 communicates with the solution discharging array 27. The solution held by the solution holding vessel 22 is filled into each of the pressure chambers 210 of the solution discharging array 27 via the opening 22a on a bottom surface of the solution holding vessel 22.

The solution held in the droplet ejection device 2 contains any of, for example, low molecular compound, fluorescent reagent, protein, antibody, nucleic acid, plasma, bacteria, blood cell, or cell. A main solvent, which is considered to be the substance with the largest weight ratio or volume ratio in the solution, is generally water, glycerin, or dimethylsulfoxide.

The solution is typically likely to be a clear solution. A clear solution is a solution without a coloring material. Color development may be noticeable if the solute itself may have a fluorescent property in ultraviolet light and thus the solution may absorb extraneous ultraviolet light and emit visible light. If only a minute amount of such an ultraviolet fluorescent solute is dissolved in the clear solvent, then such a resulting solution even with a slight color can also be considered or treated as a clear solution.

The droplet dispensing apparatus 1 or the droplet ejection device 2 may include a sensor for detecting a state where the solution holding vessel 22 is filled with the solution. The processor 19 may detect that the solution holding vessel 22 is filled with the solution using the sensor. A method for detecting the state of the solution in the solution holding vessel 22 by the processor 19 is not limited to a specific method.

Moreover, the processor 19 has a function of operating to discharge the solution from the droplet ejection device 2 to each well opening 300 of the microplate 4 when determining that the solution holding vessel 22 is filled with the solution.

The operator inputs to the operation unit 18a of the host computer 18 an instruction to discharge the solution to each well opening 300 of the microplate 4. The operator may input an instruction to discharge the solution from the specific solution holding vessel 22.

The host computer 18 receives the operation instructing to discharge the solution, and then transmits a discharging signal to the droplet dispensing apparatus 1 instructing discharge of the solution. The discharging signal may instruct discharge of solution from a specific solution holding vessel 22.

The processor 19 receives the discharging signal via the interface 17. The processor 19 causes the droplet ejection device 2 to discharge the solution to each well opening 300 of the microplate 4 based on the discharging signal. The processor 19 controls the X-direction moving stand motor 9b and the Y-direction moving stand motor 10b to move the droplet ejection device 2 set on the mounting module 5 to a predetermined position. For example, the processor 19 moves the droplet ejection device 2 to a position where the plurality of nozzles 110 are accommodated in the well opening 300. Furthermore, the processor 19 may move the droplet ejection device 2 to the predetermined position in accordance with the discharging signal.

When the droplet ejection device 2 is moved to the predetermined position, the processor 19 causes a voltage for discharging the solution to be applied to the driving element 130 using the driving circuit 11. At this time, the processor 19 transmits a signal to the driving circuit 11, and a voltage control signal is input from the driving circuit 11 to the control signal input terminal 25 of the electrical board wiring 24. The voltage control signal is input to the driving element 130 from the electrode terminal connecting portion 26 of the electrical board wiring 24. The driving element 130 deforms the diaphragm 120 in response to the application of the voltage control signal, thereby changing a volume of the pressure chamber 210. Accordingly, the solution is discharged as solution droplets from the nozzle 110 of the solution discharging array 27.

In use of the droplet ejection device 2, an amount of single droplet discharged from the nozzle 110 is 2 to 5 pL. Therefore, it is possible to control fluid dispensing amounts on the order of pL to µL by controlling the number of drops dispensed. In order that the fluid is dropped in a predetermined amount into the well opening 300 of the microplate 4, the number of the discharging operations of the solution discharging array 27 is set.

In order that the fluid is dropped in a predetermined amount into the well opening 300 of the microplate 4, the processor 19 repeatedly transmits the signals to the X-direction moving stand control circuit 9a, the Y-direction moving stand control circuit 10a, and the driving circuit 11. The number of the discharging operations and the position at which the solution is discharged, set by the processor 19, are not limited to a specific configuration.

Moreover, the processor 19 has a function of operating to drop droplets for forming the test pattern p on the test paper 40 when determining that the solution is discharged from the droplet ejection device 2 to each well opening 300 of the microplate 4, and a function of performing image processing on the formed test pattern P.

The operator inputs an operation instructing to form the test pattern p and an operation instructing to measure an area of the test pattern p, via the operation unit 18a of the host computer 18. At this time, the operator may input an operation instructing to form the test pattern p and an operation instructing to measure an area of the test pattern p, for the specific solution holding vessel 22.

The host computer 18 receives the operation instructing to form the test pattern p and the operation instructing to measure the area of the test pattern p, and then transmits to the droplet dispensing apparatus 1 a test signal instructing to form the test pattern p and to measure the area of the test pattern p. The test signal may instruct to form the test pattern p and to measure the area of the test pattern p for the specific solution holding vessel 22.

The processor 19 receives the test signal via the interface 17. The processor 19 causes the droplet ejection device 2 to discharge the solution based on the test signal. The processor 19 controls the X-direction moving stand motor 9b and the Y-direction moving stand motor 10b to move the droplet ejection device 2 set on the mounting module 5 to a predetermined position on the test paper 40 held on the test paper placing stand 41.

In this embodiment, one or more droplets are dropped onto the test paper 40 from each of the nine nozzles 110 of the solution discharging array 27, so that nine dark blue dots, i.e. regions discolored by the attached solution, are formed as the test pattern p (see Example 1 of FIG. 7A).

The processor 19 controls the X-direction moving stand motor 9b and the Y-direction moving stand motor 10b to move the image capturing unit 50 of the mounting module 5 to a position opposite to the test paper 40 after the test pattern p is formed. The processor 19 causes the image capturing unit 50 to capture the test patterns p1 to p9 of nine dots formed on the test paper 40 after moving the image capturing unit 50. At this time, the processor 19 acquires image data of the test pattern p captured by the image capturing unit 50, and binarizes the image data. Moreover, the processor 19 may be configured to, for example, calculate the area of the test pattern p simultaneously with the binarization. Subsequently, the processor 19 transmits the image data of the test pattern p to the host computer 18 via the interface 17. The host computer 18 receives the signal and displays the image data of the test pattern p on the display unit 18b or the like.

An operation of the processor 19 of the droplet dispensing apparatus 1 will be described below.

FIG. 9 is a flowchart illustrating operations of the processor 19 of the droplet dispensing apparatus 1.

First, the processor 19 determines whether or not the filling signal is received via the interface 17 (ACT 11). When determining that the filling signal is not received via the interface 17 (ACT 11: NO), the process returns to ACT 11.

When determining that the filling signal is received via the interface 17 (ACT 11: YES), the processor 19 determines whether or not the discharging signal is received via the interface 17 (ACT 12). When determining that the discharging signal is not received via the interface 17 (ACT 12: NO), the process returns to ACT 12. Additionally, the processor 19 may transmit to the host computer 18 a signal indicating that the processor 19 waits for the discharging signal via the interface 17 after determining that the discharging signal is not received yet.

When determining that the discharging signal is received via the interface 17 (ACT 12: YES), the processor 19 controls the droplet ejection device 2 to discharge the solution into the each well opening 300 of the microplate 4 in accordance with the discharging signal (ACT 13).

The processor 19 determines whether or not the test signal is received via the interface 17 (ACT 14). When determining that the test signal is not received via the interface 17 (ACT 14: NO), the process returns to ACT 14.

When determining that the test signal is received via the interface 17 (ACT 14: YES), the processor 19 operates to drop the solution onto the test paper 40 from the droplet ejection device 2 in accordance with the test signal, captures the image of the test pattern p by the image capturing unit 50, and transmits to the host computer 18 a signal indicating the image date of the test pattern p and an output file of the area of each dot in the test pattern p.

The host computer 18 receives the signal and displays the image data of the test pattern p and the output file of the area of the test pattern p on the display unit 18b or the like (ACT 15). When the processing of ACT 15 is completed, the processor 19 ends the operations.

Particular operations of the configuration described above will be described below. The droplet dispensing apparatus 1 according to this embodiment uses the droplet ejection device 2 fixed to the mounting module 5. The droplet ejection device 2 is inserted from a front opening side of a slit 32 of a module body 15 into the slit 32 of the module body 15 when attaching the droplet ejection device 2 to the mounting module 5. The test paper 40 is held on the test paper placing stand 41 by the test paper holding members 42.

The solution is supplied using a pipetter or the like (not shown) in a predetermined amount from the upper opening 22b of the solution holding vessel 22 of the droplet ejection device 2 to, for example, the solution holding vessel 22-1 at a right end in FIG. 2. The solution is held on an inner surface of the solution holding vessel 22. The opening 22a at the bottom of the solution holding vessel 22 communicates with the solution discharging array 27. The solution held by the solution holding vessel 22 is filled into each of the pressure chambers 210 of the solution discharging array 27 via the opening 22a on the bottom surface of the solution holding vessel 22.

The droplet ejection device 2 is moved to a position where all of the nozzles 110 of the solution discharging array 27 are accommodated in the well opening 300 in a state where the solution is filled in the droplet ejection device 2. Then a voltage control signal is input to the control signal input terminal 25 of the electrical board wiring 24. The voltage control signal is supplied to the driving element 130 from the electrode terminal connecting portion 26 of the electrical board wiring 24. The diaphragm 120 deforms in response to the voltage control signal applied to the driving element 130, thereby changing a volume of the pressure chamber 210. Accordingly, the solution is discharged as solution droplets from the nozzle 110 of the solution discharging array 27. The fluid is thus dropped from the nozzle 110 in a predetermined amount into each well opening 300 of the microplate 4.

The droplet ejection device 2 moves the solution holding vessel 22 for dropwise operation to a predetermined position on the test paper 40 held on the test paper placing stand 41, after the fluid is dropped in the predetermined amount into each well opening 300 of the microplate 4. For example, when the solution is dropped from the solution holding vessel 22-1 at a right end in FIG. 2, the solution holding vessel 22-1 is moved to the predetermined position on the test paper 40 held on the test paper placing stand 41.

The test pattern p is formed on the test paper 40 by dropping one or more droplets on the test paper 40 from each of the nine nozzles of the solution discharging array 27 communicating with the solution holding vessel 22 for dropwise operation within the droplet ejection device 2. Subsequently, the image capturing unit 50 is moved to a position where the test pattern p has been formed on the test paper 40 to capture the test pattern p. The image data of the captured test pattern p is transmitted to the host computer 18 and displayed on the display unit 18b of the host computer 18. The operator sees the display unit 18b to evaluate the test pattern p. Moreover, the host computer 18 may analyze the image data to evaluate the test pattern p and display the test results on the display unit 18b.

In this embodiment, 4 pL of the solution is dropped onto the test paper 40 from each of the nine nozzles 110 of the solution discharging array 27. At this time, the test pattern p is formed at a place at which the solution has attached to the test paper 40, and appears as a dark blue discolored region with a diameter of about 40 µm. Example 1 of the test pattern p shows the individual test patterns p1 to p9 as nine annular dots corresponding to the arrangement of the nine nozzles 110 of the solution discharging array 27, as shown in FIG. 7A. In this depicted case, none of the nine nozzles 110 of the solution discharging array 27 have any nozzle clogging issues. However, FIG. 7B illustrates Example 2 of the test pattern p, in which one of the test patterns (p8) has not been formed. In this case, it is possible to detect a discharge failure indicating that one nozzle 110, corresponding to a position of the test pattern p8 in FIG. 7A, out of the nine nozzles 110, has not appropriately discharged the solution.

The droplet dispensing apparatus 1 of the embodiment described above includes the test paper placing stand 41 placing the test paper 40 that is discolored at a place to which the solution is attached. Accordingly, it is possible to detect a discharge failure in which at least some of the nozzles 110 of the droplet ejection device 2 do not discharge the solution, even when a clear solution is being dispensed from the plurality of the nozzles 110. When a non-discharging nozzle 110 is detected, it is possible to stop or modify the dose response experiment or the like. Consequently, this testing contributes to suppression of waste of test solutions and early finding of deviations in the final evaluation results and/or incorrect evaluations of the medicine performance, or the like. Consequently, it is possible to provide the droplet dispensing apparatus 1 capable of preventing deviation in the final evaluation results or incorrect evaluation of the medicine performance.

### Second Embodiment

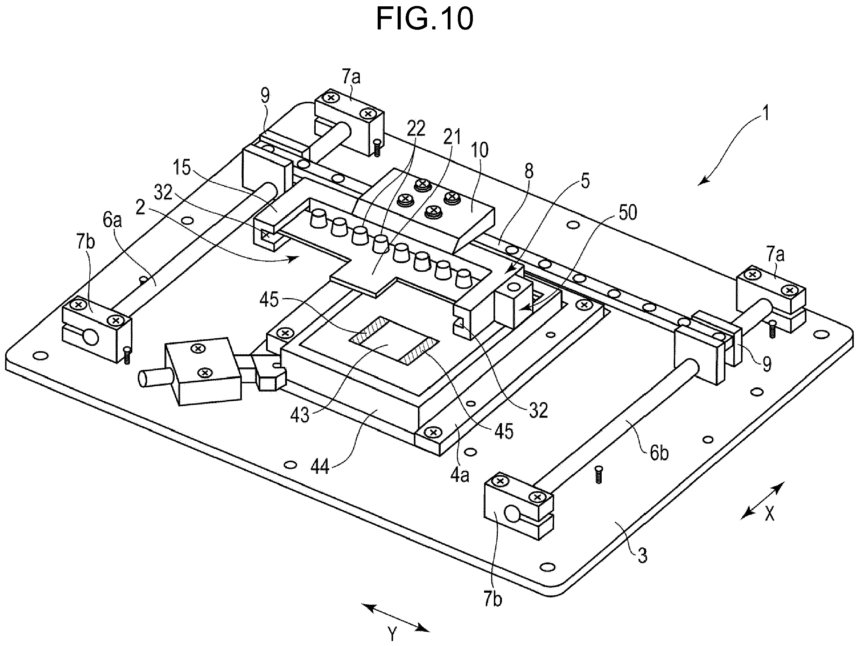

A droplet dispensing apparatus 1 according to a second embodiment will be described with reference to FIG. 10. The second embodiment is, in general, a modification of the first embodiment. In the first embodiment, the test paper placing stand 41 is provided next to the attachment member 4a of the microplate 4 as a region used for placing the test paper 40. In the second embodiment, the microplate 4 is first removed from the attachment member 4a. A test paper placing stand 44 having substantially the same external size as the microplate 4 is then detachably attached to the attachment member 4a instead of the microplate 4. The test paper placing stand 44 has the same height as the microplate 4. Accordingly, the test paper placing stand 44 is fixed to the attachment member 4a in the same region where the microplate 4 would be fixed. The test paper placing stand 44 includes test paper holding members 45 for holding a test paper 43. The other parts have the same configurations as those in the first embodiment. In FIG. 10, the same parts as those already depicted in FIGS. 1 to 9 are denoted by the same reference numerals, and descriptions thereof are omitted.

In the second embodiment, the droplets are dropped in a predetermined amount into each well opening of the microplate 4 from the droplet ejection device 2 in a state where the microplate 4 is attached to the attachment member 4a, in the same manner as in the first embodiment. The microplate 4 is then removed from the attachment member 4a after the droplets have been dropped in the predetermined amount into each well opening of the microplate 4 from the droplet ejection device 2. In place of the microplate 4 having the same external size, the test paper placing stand 44 is then attached to the attachment member 4a at the place where the microplate 4 was previously attached. The test paper 43 is held by the test paper holding members 45 on the test paper placing stand 44.

In the second embodiment, since the height of the test paper placing stand 44 is substantially the same as the height of the microplate 4, it is unnecessary to change the height at which the droplet ejection device 2 drops the solution droplets into the well openings 300 of the microplate 4 to the height at which the droplet ejection device 2 drops the solution droplets onto the test paper 43 on the test paper placing stand 44, and vice versa.

The test paper 43 is held by the test paper holding members 45 on the test paper placing stand 44. Subsequently, the droplet ejection device 2 moves the solution holding vessel 22 (for example, when the solution is dropped from the solution holding vessel 22-1 at a right end in FIG. 3, the solution holding vessel 22-1) for dropwise operation to a predetermined position on the test paper 43 held on the test paper placing stand 44. One or more droplets are dropped onto the test paper 43 from each of the nine nozzles 110 of the solution discharging array 27 communicating with the solution holding vessel 22-1. As a result, the test pattern p is formed on the test paper 43. The image capturing unit 50 of the mounting module 5 is moved to a position corresponding to the test paper 43. The image capturing unit 50 captures the test patterns p. The image data of the captured test pattern p is transmitted to a control PC to test and check whether or not there is a non-discharging nozzle 110.

The droplet dispensing apparatus 1 according to the second embodiment also includes a test paper placing stand 44 for placing the test paper 43 that is discolored at a place to which the solution is attached. Accordingly, it is possible to detect discharge failures in which some of the nozzles 110 do not discharge the solution even when a clear solution is being dispensed from the nozzles 110. When a non-discharging nozzle 110 is detected, it is possible to stop early the dose response experiment or the like. Consequently, this testing contributes to suppression of waste of the solution and early finding of deviation in the final evaluation results and/or incorrect evaluation of the medicine performance, or the like. Therefore, it is possible to provide the droplet dispensing apparatus 1 capable of preventing deviation in the final evaluation results or incorrect evaluation of the medicine performance.

Furthermore, since a region for fixing the microplate 4 is also used as a placing region for the test paper placing stand 44 in the second embodiment, the droplet dispensing apparatus 1 can be advantageously downsized as compared with a case as in the first embodiment, where the region for fixing the microplate 4 and the placing region for the test paper placing stand 41 for placing the test paper 40 are separately provided.

The microplate 4 is removed from the attachment member 4a, and the test paper placing stand 44 is detachably provided on the attachment member 4a instead of the microplate 4 in the second embodiment. Alternatively, the test paper 40 may be placed on top of the microplate 4 itself attached to the attachment member 4a.

### Third Embodiment

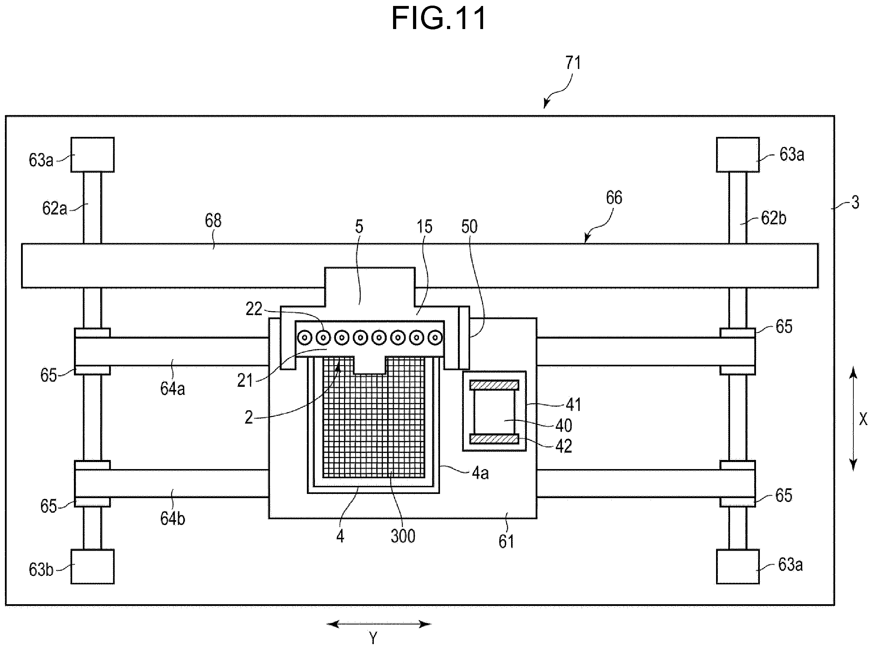

A droplet dispensing apparatus 71 according to a third embodiment will be described with reference with FIGS. 11 to 13. In the first embodiment, the droplet ejection device 2 and the image capturing unit 50, mounted on the mounting module 5, are moved while the test paper placing stand 41 for placing the test paper 40 is fixed. The droplet dispensing apparatus 71 according to the third embodiment is a modification of the first embodiment, in which the microplate 4 and the test paper placing stand 41 are moved while the droplet ejection device 2 and the image capturing unit 50 are fixed. In FIGS. 11 to 13, the same parts as those in FIGS. 1 to 9 are denoted by the same reference numerals, and descriptions thereof are omitted.

The microplate 4 and the test paper placing stand 41 are fixed to a flat Y-direction moving stage 61 in the third embodiment. The Y-direction moving stage 61 includes the frame-like attachment member 4a to detachably attach the microplate 4.

A pair of right and left X-direction guide rails 62a, 62b extend, on the base 3, in X-direction and provided at both sides of the base 3. Both ends (upper and lower ends in FIG. 11) of each of the X-direction guide rails 62a, 62b are fixed to fixing stands 63a, 63b, each of which protrudes from the base 3.

Two Y-direction guide rails 64a, 64b, each of which extends in Y-direction, are provided between the X-direction guide rails 62a, 62b. The two Y-direction guide rails 64a, 64b are arranged in parallel with an interval in X-direction. Both ends of each of the Y-direction guide rails 64a, 64b are respectively fixed to X-direction moving stands 65 slidable in X-direction along the X-direction guide rails 62a, 62b. These four X-direction moving stands 65 simultaneously slide.

A Y-direction moving stage 61 is fixed to the two Y-direction guide rails 64a, 64b. Accordingly, a movement in which the Y-direction moving stage 61 moves in Y-direction along the Y-direction guide rails 64a, 64b is combined with a movement in which the X-direction moving stand 65 moves in X-direction along the X-direction guide rails 62a, 62b, whereby the microplate 4 and the test paper placing stand 41 are movably supported at any position in X- and Y- directions perpendicular to each other.

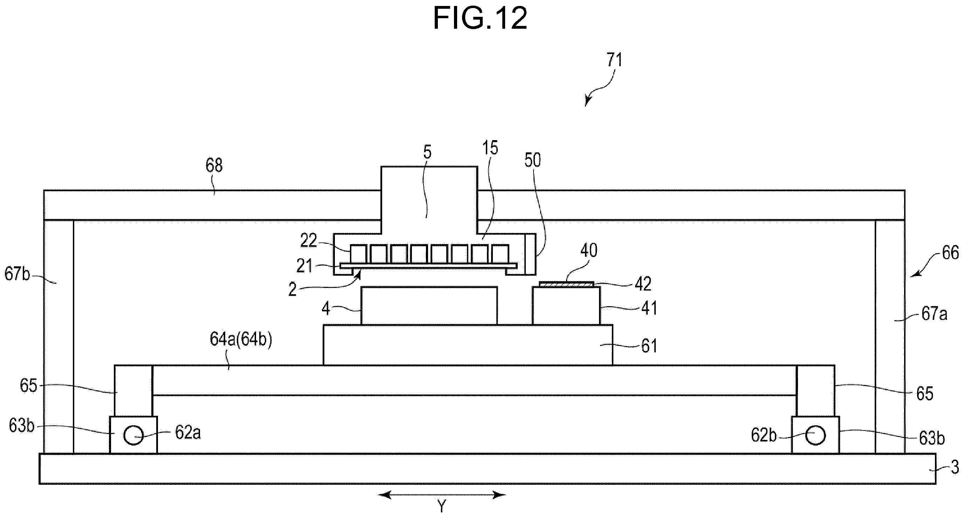

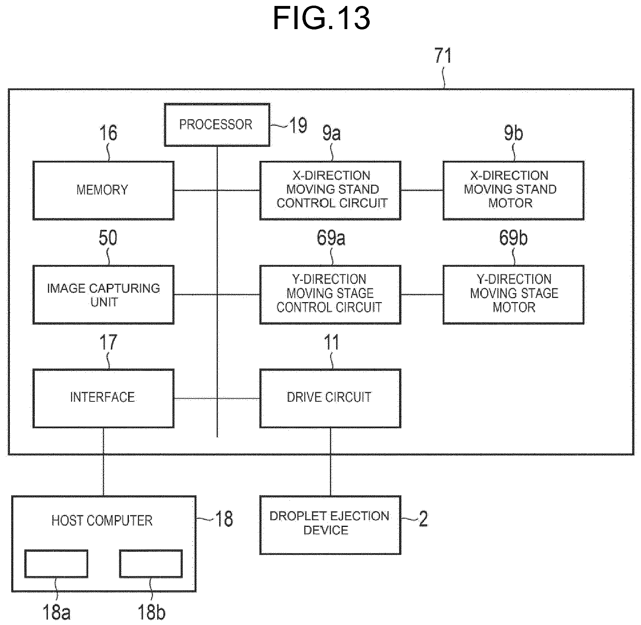

A fixing mechanism 66 of the mounting module 5 for mounting the droplet ejection device 2 is provided on the base 3 at a position not interfering with a movement range of the Y-direction moving stage 61. The fixing mechanism 66 includes two support posts 67a, 67b, and one lateral frame 68 extending in Y-direction, as shown in FIG. 12. The two support posts 67a, 67b stand vertically on both ends of the base 3 in Y-direction. The lateral frame 68 is built between upper ends of the two support posts 67a, 67b. The mounting module 5 is fixed to a substantially center position of the lateral frame 68. The droplet ejection device 2 is fixed to the mounting module 5. Furthermore, the image capturing unit 50 is mounted on a part of the module body 15, which is the attachment section of the droplet ejection device 2, in the mounting module 5. In FIG. 13, reference number 69a denotes a Y-direction moving stage control circuit for controlling a movement of the Y-direction moving stage 61, and reference number 69b denotes a Y-direction moving stage motor for driving the Y-direction moving stage 61.

Operations of the droplet dispensing apparatus 71 configured as described above will be described below. The droplet ejection device 2 is mounted on the mounting module 5. The test paper 40 is held on the test paper placing stand 41 by the test paper holding members 42.

The solution is supplied in a predetermined amount from the upper opening 22b of the solution holding vessel 22 of the droplet ejection device 2 using a pipetter or the like (not shown). The solution is held on an inner surface of the solution holding vessel 22. The opening 22a at the bottom of the solution holding vessel 22 communicates with the solution discharging array 27. The solution held by the solution holding vessel 22 is filled into each of the pressure chambers 210 of the solution discharging array 27 via the opening 22a on the bottom surface of the solution holding vessel 22.

When the droplet ejection device 2 is filled with the solution, the Y-direction moving stage 61 is moved. At this time, the Y-direction moving stage 61 is moved to a position where all of the nozzles 110 of the solution discharging array 27 of the droplet ejection device 2 are accommodated in a predetermined well opening 300 of the microplate 4.

A voltage control signal is input to the control signal input terminal 25 of the electrical board wiring 24. The voltage control signal is input to the driving element 130 from the electrode terminal connecting portion 26 of the electrical board wiring 24. The diaphragm 120 is deformed in response to the application of the voltage control signal to the driving element 130, thereby changing a volume of the pressure chamber 210. Accordingly, the solution is discharged as solution droplets from the nozzle 110 of the solution discharging array 27. The fluid is dropped in a predetermined amount from the nozzle 110 into each well opening 300 of the microplate 4.

The Y-direction moving stage 61 is moved after the fluid is dropped in the predetermined amount from the droplet ejection device 2 into each well opening 300 of the microplate 4. At this time, the test paper 40 held on the test paper placing stand 41 is moved to a position directly below the solution holding vessel 22 corresponding to a portion where the droplets are dropped from the droplet ejection device 2 (when the solution is dropped from the solution holding vessel 22-1 at a right end in FIG. 2, the solution holding vessel 22-1).

The test pattern p is formed on the test paper 40 by dropping one or more droplets to the test paper 40 from each of the nine nozzles 110 of the solution discharging array 27 communicating with the solution holding vessel 22 corresponding to a portion where the droplet is dropped from the droplet ejection device 2.

The Y-direction moving stage 61 is moved to a position where the test pattern on the test paper 40 is accommodated within a capturing range of the image capturing unit 50 so that the test pattern p is captured. The image data of the captured test pattern p is transmitted to the host computer 18 and displayed on the display unit 18b of the host computer 18. The operator can see the display unit 18b to evaluate the test pattern p. Moreover, the host computer 18 may analyze the image data to test the test pattern p and display the test results on the display unit 18b.

The droplet dispensing apparatus 71 according the third embodiment also includes the test paper placing stand 41 (placing region) for placing the test paper 40 that is discolored at a place to which the solution is attached. Accordingly, it is possible to detect discharge failure in which a part of the plurality of the nozzles 110 does not discharge the solution even when the clear solution is dropped from the plurality of the nozzles 110. When the non-discharging nozzle 110 is detected, it is possible to stop early, for example, the dose response experiment or the like. Consequently, it contributes to suppression of waste of the solution and early finding of deviation in the final evaluation results and/or incorrect evaluation of the medicine performance, or the like. Consequently, it is possible to provide the droplet dispensing apparatus 71 capable of preventing deviation in the final evaluation results or incorrect evaluation of the medicine performance.

### Fourth Embodiment

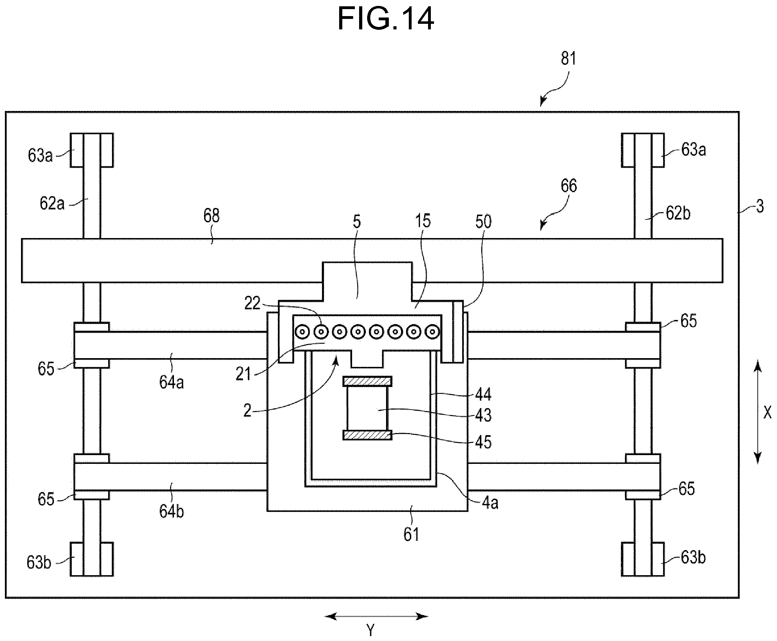

A droplet dispensing apparatus 81 according to a fourth embodiment will be described with reference with FIG. 14. The droplet dispensing apparatus 81 according to the fourth embodiment is a modification of the droplet dispensing apparatus 71 according to the third embodiment. In the third embodiment, the test paper placing stand 41 is provided next to the attachment member 4a of the microplate 4 on the Y-direction moving stage 61. In the fourth embodiment, the microplate 4 is removed from the attachment member 4a and a test paper placing stand 44 having substantially the same external size as the microplate 4 is detachably attached to the attachment member 4a instead of the microplate 4. The test paper placing stand 44 has the same height as the microplate 4. Accordingly, the test paper placing stand 44 is fixed to the attachment member 4a in a region where the microplate 4 would normally be fixed. The test paper placing stand 44 includes test paper holding members 45 for holding a test paper 43. The other parts have the same configurations as those in the third embodiment.

In the fourth embodiment, the droplets are dispensed in a predetermined amount into each well opening of the microplate 4 from the droplet ejection device 2 while the microplate 4 is attached to the attachment member 4a, in the same manner as in the third embodiment. The microplate 4 is then removed from the attachment member 4a after the droplets have been dropped in the predetermined amount into each well opening of the microplate 4 from the droplet ejection device 2. The test paper placing stand 44 having substantially the same external size as the microplate 4 is then detachably attached to the attachment member 4a in place of the microplate 4, at the same place at which the microplate 4 was previously attached. The test paper 43 is held by the test paper holding members 45 on the test paper placing stand 44.

In the fourth embodiment, since the height of the test paper placing stand 44 is substantially the same as the height of the microplate 4, it is unnecessary to change from the height at which the droplet ejection device 2 drops the solution droplets into the well opening 300 of the microplate 4 to the height at which the droplet ejection device 2 drops the solution droplets onto the test paper 43 on the test paper placing stand 44, and vice versa.

The test paper 43 is held by the test paper holding members 45 on the test paper placing stand 44. Subsequently, the Y-direction moving stage 61 is moved. At this time, the test paper 43 is moved to a position directly below the solution holding vessel 22 corresponding to a portion where the droplets are dropped from the droplet ejection device 2 (for example, when the solution is dropped from the solution holding vessel 22-1 at a right end in FIG. 3, the solution holding vessel 22-1).

One or more droplets are dropped onto the test paper 43 from each of the nine nozzles 110 of the solution discharging array 27 communicating with the solution holding vessel 22 corresponding to a portion where the droplets are dropped from the droplet ejection device 2. Accordingly, the test pattern p is formed on the test paper 43. The Y-direction moving stage 61 moves to a position where the test pattern p on the test paper 43 is accommodated within a capturing range of the image capturing unit 50. The image capturing unit 50 captures the test patterns p. The image data of the captured test pattern p is transmitted to the host computer 18 to test and determine whether or not there is a non-discharging nozzle.

The droplet dispensing apparatus 81 according to the fourth embodiment also includes the test paper placing stand 44 for placing the test paper 43 that is discolored at a place to which the solution is attached. Accordingly, it is possible to detect discharge failure in which a part of the plurality of the nozzles 110 does not discharge the solution even when the clear solution is dropped from the plurality of the nozzles 110. When the non-discharging nozzle 110 is detected, it is possible to stop early the dose response experiment or the like. Consequently, this testing contributes to suppression of waste of the solution and early finding of deviation in the final evaluation results and/or incorrect evaluation of the medicine performance, or the like. Therefore, it is possible to provide the droplet dispensing apparatus 81 capable of preventing deviation in the final evaluation results or incorrect evaluation of the medicine performance.

A region for fixing the microplate 4 is also used as a placing region for fixing the test paper placing stand 44 in the fourth embodiment. Consequently, it is possibly advantageous that the droplet dispensing apparatus 81 can be downsized as compared with a case where the placing region of the test paper 40, i.e., the region in which the test paper placing stand 41 is provided, is defined separately from the region for fixing the microplate 4, as in the third embodiment.

The driving element 130 as the driving unit is in an annular shape in the embodiments stated above, however, a shape of the driving unit is not limited thereto. The driving unit may be, for example, in a rhomboid or an ellipse shape. A shape of the pressure chamber 210 is also not limited to an annular shape, but may be in a rhomboid shape, an ellipse shape, a rectangular shape or the like.

The nozzle 110 is arranged at a center of the driving element 130 in the embodiments, but a position of the nozzle 110 is not limited as long as the nozzle 110 can discharge the solution from the pressure chamber 210. For example, the nozzle 110 may be formed outside the driving element 130, instead of within the driving element 130.

The actuator 170 includes the driving element 130 having the diaphragm 120 and the piezoelectric film, and discharges the solution by a piezoelectric method. However, the actuator 170 is not limited to a specific configuration. For example, the actuator 170 may consist of a thin film heat transfer heater and may discharge the solution by a thermal jet method.

It is possible to provide a droplet dispensing apparatus capable of preventing the incorrect evaluation when dropping the clear solution with at least one of the embodiments described above.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions and changes in the form of the embodiments described herein may be made without departing from the scope of the present disclosure. The accompanying claims and their equivalents are intended to cover such forms or modifications as would fall within the scope of the present disclosure.

## Claims

1. A droplet dispensing apparatus (1), comprising:
a droplet ejection device (2) having a solution holding vessel (22) and an array of nozzles (110) for ejection of droplets communicating with the solution holding vessel;
a microplate holder (4a) configured to hold a microplate (4) including an array of wells (300) into which the droplets are ejected; and
a sheet stand (41, 44) on which a test sheet (40, 43) for testing the array of nozzles is placeable, wherein
the test sheet has a receptive layer for receiving a droplet and becomes colored or discolored at a place where a light-transmissive droplet is received, and
the droplet ejection device is configured to:
move to a first position above the microplate holder for ejection of droplets into one of the wells, and
move to a second position above the sheet stand for ejection of droplets onto the test sheet.

2. The droplet dispensing apparatus according to claim 1, wherein the microplate holder and the sheet stand are both attached to a base (3).

3. The droplet dispensing apparatus according to claim 1 or 2, wherein
the microplate holder and the sheet stand are adjacent to each other.

4. The droplet dispensing apparatus according to claim 1, wherein the sheet stand is configured to be detachably attached to the microplate holder in place of the microplate.

5. The droplet dispensing apparatus according to any one of claims 1 to 4, wherein
the droplet ejection device further includes:
an array of pressure chamber (210) each includes a discharge port for supplying a solution to a corresponding nozzle of the array of nozzles on a first side, and a supply port communicating with the solution holding vessel on a second side; and
an array of actuators (170) each configured to cause a pressure change in a corresponding pressure chamber in the array of pressure chambers to control an ejection of a droplet of the solution from the corresponding nozzle.

6. The droplet dispensing apparatus according to any one of claims 1 to 5, further comprising:
an image capturing device (50) configured to move to a position above the sheet stand; and
a controller (19) configured to perform image processing on image data generated from an image captured by the image capturing device when at the position above the sheet stand.

7. The droplet dispensing apparatus according to claim 6, wherein the controller is further configured to send an image signal corresponding to the image data to a display (18b) and cause the display to display a captured image.

8. The droplet dispensing apparatus according to any one of claims 1 to 7, wherein the solution holding vessel includes a solution inlet (22b) for receiving solution and a solution outlet (22a) configured to supply the solution to the array of nozzles.

9. A method for testing a droplet ejection device of a droplet dispensing apparatus, comprising:
placing a test sheet for testing an array of nozzles of the droplet ejection device on a sheet stand of the droplet dispensing apparatus, the test sheet being at a same height as an upper surface of a microplate when the microplate is attached to a microplate holder of the droplet dispensing apparatus;
positioning the droplet ejection device above the test sheet;
ejecting droplets from the array of nozzles onto the test sheet; and
capturing image of the test sheet after ejecting the droplets, wherein
the test sheet has a receptive layer for receiving a droplet and becomes colored or discolored at a place where a light-transmissive droplet is received.

10. The method according to claim 9, wherein the sheet stand is fixed adjacent to the microplate holder on a base of the droplet dispensing apparatus.

11. The method according to claim 9 or 10, wherein the sheet stand is disposed on the microplate holder during the ejecting of droplets onto the test sheet.

12. The method according to any one of claims 9 to 11, wherein capturing the image of the test sheet comprises moving an image capturing device to a position of the test sheet after ejecting the droplets onto the test sheet.

13. The method according to any one of claims 9 to 12, wherein the ejected droplets are from an aqueous, clear solution.

14. The method according to any one of claims 9 to 12, wherein the ejected droplets are from a non-aqueous, clear solution.
